# EUROPÄISCHE PATENTANMELDUNG

(11) **EP 2 093 676 A1**
(43) Veröffentlichungstag der Anmeldung: **26.08.2009**
(21) Anmeldenummer: 08003134.7
(22) Anmeldetag: 20.02.2008
(51) Int. Cl.: G06F 17/30, H04L 29/08

(54) **Verfahren zur Generierung von Funktionsbausteinen für Webdienste.**

(71) Anmelder: SIEMENS AKTIENGESELLSCHAFT, 80333 München (DE)
(72) Erfinder: Schuierer, Wolfgang, 92421 Schwandorf (DE)

(57) **Zusammenfassung**

PLC's (Programmable Logic Control) führen im laufenden Betrieb beispielsweise während der Steuerung einer Maschine eine Datentransaktion als Client mit einem Server durch. Diese wird vom PLC initiiert, indem dieser eine Kommunikation mit dem Server über Webservices vornimmt. Hier besteht aber das Problem, dass die einen Webservice beschreibenden Funktionsbausteine speziell für diesen Webservice realisiert werden müssten, was in der Praxis einen großen Aufwand bedeutet. Die Erfindung löst dieses Problem, indem im Zuge der Erstellung eines Anwenderprogramms des PLC eine WSDL Datei aufgerufen wird und zusätzliche Informationen bereitgestellt werden. Aus diesen Informationen werden dann Funktionsbausteine für Webanwendungen automatisch generiert und in das Anwenderprogramm eingebunden. Damit ist der Entwicklungsaufwand erheblich reduziert.

## Beschreibung

Verfahren zur Generierung von Funktionsbausteinen für Webdienste.

Unter einem PLC (Programmable Logic Control) wird ein digitaler Computer bzw. eine Steuervorrichtung verstanden, die zur Automatisierung industrieller Prozesse wie beispielsweise der Steuerung von Maschinen oder Fliessbänder verwendet werden. Der PLC unterscheidet sich von einem herkömmlichen Computer in einer Reihe von Merkmalen:

So ist er aufgrund seines Einsatzes für harte Umweltbedingungen wie Feuchtigkeit, Staub, Hitze, Kälte oder Vibrationen/ Stösse konzipiert. Er ist als Realzeitsystem zu verstehen, das eine Vielzahl von Eingangssignalen innerhalb einer fest vorgegebenen Zeit zu verarbeiten hat, da sonst unbeabsichtigte Operationen resultieren können.

Hierzu ist der PLC auf der Eingangsseite mit einer Vielzahl von Sensoren verbunden, über die er viele Eingangssignale (analoge Prozessvariable wie Temperatur, Druck etc.) aufnimmt und verarbeitet. Auf der Ausgangsseite ist der PLC mit Aktuatoren verbunden, die er steuert (elektrische Motoren, hydraulische Zylinder etc). Aktuatoren bezeichnen in der Steuer- und Regelungstechnik das wandlerbezogene Gegenstück zu Sensoren und bilden das Stellglied in einem Regelkreis. Sie setzen Signale einer Regelung in (meist) mechanische Arbeit um (z. B. ein Ventil, das öffnet oder schließt).

Ein PLC der eingangs genannten Art führt nun beim Stand der Technik online d.h. im laufenden Betrieb beispielsweise während der Steuerung einer Maschine eine Datentransaktion mit einem Server durch. Diese wird vom PLC initiiert, indem dieser eine TCP/ IP Verbindung zu dem entsprechenden Server aufbaut. Der dabei entstehende Netzwerkprozess wird auf der PLC-Seite durch ein entsprechendes IEC-Programm und auf der Server-Seite durch den zugehörigen Prozess unterstützt. Als Protokoll wird das ISOonTCP Protokoll verwendet. Der Server erhält die Transaktionsanforderung, führt die entsprechenden Operationen aus und sendet die Antwort der Transaktion wieder zum PLC zurück. Als Transaktion kann das Anfordern von Daten (wie z. B. Artikelnummer oder Serialnummer) ebenso in Betracht kommen, wie das Senden von Daten, wo z. B. Prozessergebnisse einer Serialnummer zugeordnet werden sollen.

Problematisch an einer derartigen Vorgehensweise ist der Aufwand, den es zum Erstellen der PLC Programme zur Durchführung der Transaktionen zu realisieren gilt. Dies liegt unter anderem daran, dass eine sehr enge Abstimmung der beiden Programme notwendig ist, da das Implementieren neuer Funktionen und Änderungen sowohl sendeseitig als auch empfangsseitig (beim Client) detailliert durchgeführt werden muss.

Beim Stand der Technik hat sich aus diesem Grund eine weitere Möglichkeit herauskristallisiert, derartige Transaktionen durchzuführen. Hierzu werden Webservices oder Webdienste verwendet.

Grundsätzlich sind Webservices - im Gegensatz zu Webseiten - nicht für menschliche Benutzer gedacht sondern für Softwaresysteme, die automatisiert Daten austauschen und/ oder Funktionen auf entfernten Rechnern aufrufen. Ein Webservice oder Webdienst ist dabei eine Software-Anwendung, der mit einem Uniform Resource Identifier (URI) eindeutig identifizierbar und damit ansprechbar ist und dessen Schnittstellen als XML-Artefakte definiert sind. Ein Webservice unterstützt die direkte Interaktion mit anderen Software-Agenten unter Verwendung XML-basierter Nachrichten durch den Austausch über internetbasierte Protokolle. Anfragen an einen Webservice werden von Clientprogrammen gestellt, der Webservice antwortet mit der gewünschten Information.

Aus der US Patentschrift US 6,915,330 ist ein Verfahren bekannt, demgemäß ein PLC als Client mit einem Webservice kommuniziert. Hier besteht das Problem, dass die einen Webservice beschreibenden Funktionsbausteine sowie die den Webservice aufrufenden Funktionsbausteine speziell für diesen Webservice realisiert werden müssen, was in der Praxis einen großen Aufwand bedeutet.

Der Erfindung liegt die Aufgabe zugrunde, einen Weg aufzuzeigen, wie die Kommunikation zwischen Client und Webservices vereinfacht werden kann.

Die Erfindung wird ausgehend von den im Oberbegriff der Patentansprüche 1 und 6 angegebenen Merkmale durch die im kennzeichnenden Teil beanspruchten Merkmale gelöst.

Der Vorteil der Erfindung ist darin zu sehen, dass im Zuge der Erstellung des Anwenderprogramms eines PLC eine WSDL Datei aufgerufen wird, aus der aus den in dieser gespeicherten Informationen Funktionsbausteine für Webdienste automatisch generiert werden. Diese werden dann in das Anwenderprogramm eingebunden. Damit ist der Entwicklungsaufwand erheblich reduziert. Ferner wird mit dieser Vorgehensweise die Implementierung der Kommunikation zwischen Controlebene (z.B. PLC) und den Ebenen MES (Manufacturing Execution System) und ERP (Enterprise Resource Planning) unterstützt. Damit wird auch der TIA-Gedanke (Totally Integrated Automation) umgesetzt.

Die Erfindung wird im Folgenden anhand eines figürlich dargestellten Ausführungsbeispiels näher erläutert.

Es zeigen:
- Figur 1: die Verhältnisse, wie sie sich zwischen Client und Server beim Stand der Technik darstellen,
- Figur 2: das SOAP Protokoll im TCP/ IP Protokollstapel gemäß dem Stand der Technik,
- Figur 3: die Verhältnisse in der Steuervorrichtung PLC, die die Funktionalität eines Client aufweist,
- Figur 4: die Verhältnisse in der Steuervorrichtung PLC, die die Funktionalität eines Servers aufweist.

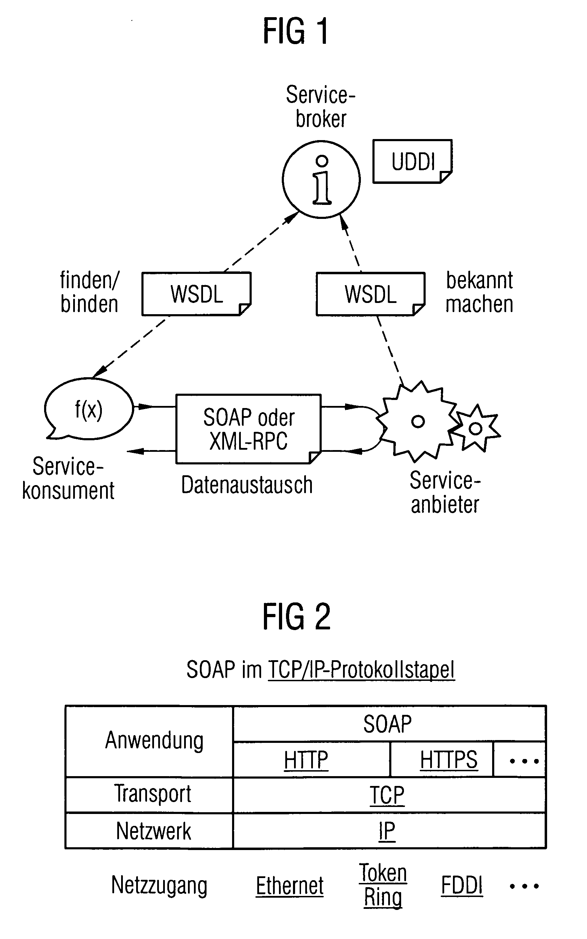

Fig. 1 zeigt die grundsätzlichen Verhältnisse zwischen Server und Client beim Stand der Technik. Der Anbieter eines Webdienstes veröffentlicht in einem Verzeichnis auf einem Server die Beschreibung seiner Webdienste (Webservices). Der Konsument (Client) durchsucht das Verzeichnis und wählt den gewünschten Webdienst aus. Nachdem Protokolldetails' ausgetauscht wurden, findet die dynamische Anbindung des Client an den Anbieter statt. Der Client greift nun hierbei auf Methoden zurück, deren Grundlage drei Standards bilden, die jeweils auf der XML-Sprache basieren:
1. UDDI als Verzeichnisdienst zur Registrierung von Webdiensten. Es ermöglicht das dynamische Finden eines Webdienstes durch den Client.
2. WSDL (Web Service Description Language) zur Beschreibung der unterstützten Methoden und deren Parametern für den Programmierer.
3. SOAP (oder XML-RPC) zur Kommunikation. Hier wird der eigentliche Aufruf gestartet.

Webdienste bilden die drei wichtigsten Teile der Zusammenarbeit zwischen Client und Server ab: das Zusammenfinden, Binden und den Datenaustausch.

SOAP (ursprünglich für Simple Object Access Protocol) ist ein Netzwerkprotokoll, mit dessen Hilfe Daten zwischen Systemen ausgetauscht und Remote Procedure Calls durchgeführt werden können. SOAP ist ein leichtgewichtiges Protokoll zum Austausch XML-basierter Nachrichten über ein Computernetzwerk. Es stellt Regeln für das Nachrichtendesign auf, es regelt, wie Daten in der Nachricht abzubilden und zu interpretieren sind, und gibt eine Konvention für entfernte Prozeduraufrufe mittels SOAP-Nachrichten vor. SOAP stützt sich dabei auf die Dienste anderer Standards: XML zur Repräsentation der Daten und Internet-Protokolle der Transport- und Anwendungsschicht (vgl. TCP/IP-Referenzmodell) zur Übertragung der Nachrichten. Die gängigste Kombination ist SOAP über http/ https und TCP.

Fig. 2 zeigt die Anbindung von SOAP an den TCP/ IP Protokollstapel. Eine minimale SOAP-Nachricht besteht aus einem "Envelope" genannten Element, welchem ein lokaler Name zugewiesen werden muss. Zentraler Bestandteil dieses Elements muss ein Body-Element sein. Optional kann zuvor ein Header-Element stehen. In diesem können Meta-Informationen, beispielsweise zum Routing, zur Verschlüsselung oder zu Transaktionsidentifizierung, untergebracht werden. Im Body-Element sind die eigentlichen Nutzdaten (Datenbaustein) untergebracht.

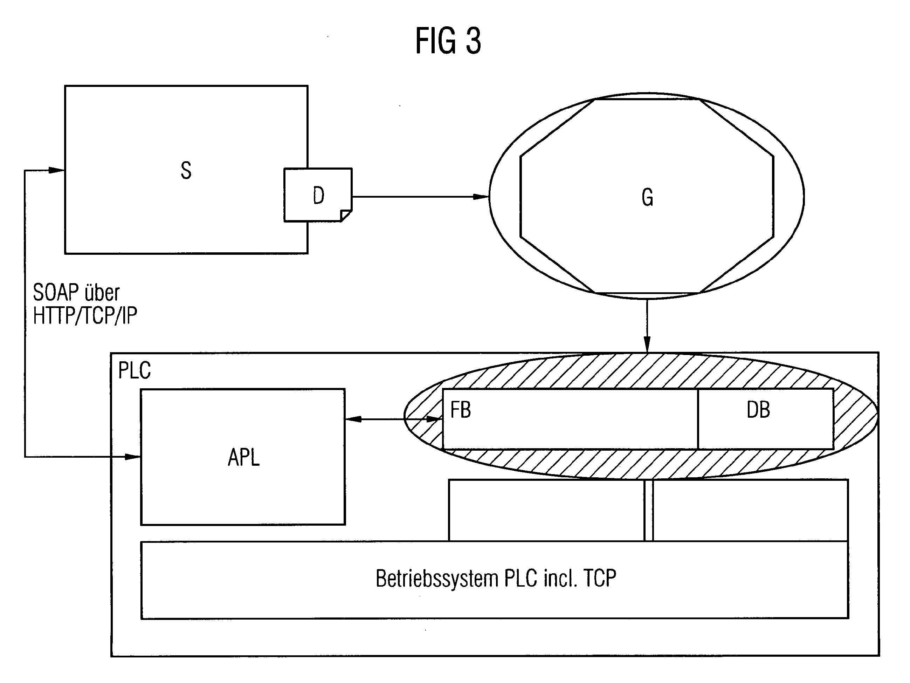

In Fig. 3 ist eine Konfiguration beschrieben, auf der das erfindungsgemäße Verfahren für einen Client zum Ablauf gelangt. Demgemäß ist ein Steuerungsvorrichtung PLC vorgesehen, die die Funktionalität eines Client aufweist und die während des laufenden Betriebes auf einen bestimmten Webdienst WS zugreifen soll. Dieser ist auf einem Server S definiert und gespeichert. Zu diesem Zweck wird vor Inbetriebnahme des Client PLC, also im Zuge der Erstellung des auf diesem später ablaufenden Anwenderprogrammes APL, das erfindungsgemäße Generatorprogramm G gestartet. Der Erstellungsprozess kann dabei unabhängig vom Client PLC beispielsweise auf einem Personal Computer vorgenommen werden.

Zu Beginn des Erstellungsprozesses wird vom Generatorprogramm G zunächst eine WSDL Datei D aufgerufen. Diese kann beispielsweise auf einem Server S des Websevice-Providers abgelegt sein oder über E-Mail zugesendet werden. WSDL Datei D beschreibt den entsprechenden Webservice WS in einer logisch abstrakten Sprache.

Gemäß vorliegendem Ausführungsbeispiel wird davon ausgegangen, dass die WSDL Datei D die Definition mehrerer Webdienste WS beinhaltet. Somit erscheint zunächst eine Auswahl an Webdiensten, gemäß der der gewünschte Webdienst WS ausgewählt werden kann. Falls es sich bei dem gewählten Webdienst WS um einen einfachen Dienst handelt, kann die Generierung der Funktionsbausteine FB vom Generatorprogramm G bereits an dieser Stelle gestartet werden.

Falls es sich bei dem gewählten Webservice WS um einen komplizierteren Dienst handelt, erfolgt in einem weiteren Schritt die Konfiguration der Webservice-Verbindung. Hierzu sind IP Adresse (Hostname incl. Domäne) sowie Portadresse (default http:80) des Servers S einzugeben, auf dem der Webservice zum Ablauf gelangt. Ferner sind Pfade, SOAP Actionen und der Name für den SOAP-Envelope anzugeben.

Im Folgenden sind dann die Input-Parameter (Request-Parameter) festzulegen. Dies sind die Parameter, die bei Aufruf des entsprechenden Webservice WS diesem übergeben werden. Die Angabe dieser Parameter ist für die gewünschte Funktionalität der Funktionsbausteine FB zwingend notwendig. Ebenso das Mapping zwischen XML Sprache und der DB Notation zu definieren. Hierzu sind folgende Parameter festzulegen:
- der Parametername/ Adresse im Datenbaustein DB
- der Parametertyp im Datenbaustein DB
- die maximale Feldlänge im Datenbaustein DB.
- Gegebenfalls müssen Typ Konvertierungen vorgenommen werden (z. B. INT --> xsd:string).
- Das mapping von xml-node auf den Parameternamen/ Adresse im Datenbaustein DB

Gleiches gilt für die Festlegung der Output-Parameter (Response-Parameter). Hier werden allerdings nur die Parameter festgelegt, die für die gewünschte Funktionsblock-Funktionalität zwingend notwendig sind. Das Mapping zwischen XML Sprache und der DB Notation ist gleichermaßen wie bei den angesprochenen Request-Parametern zu definieren. Bei der Angabe der maximalen Feldlänge im Datenbaustein DB ist zu beachten, dass der XML Wert gegebenenfalls abgeschnitten wird. Dies hat seinen Grund darin, dass die Speicherkapazität der Steuervorrichtung SPC begrenzt ist.

Schließlich wird nun im Generatorprogramm G die Generierung der Funktionsbausteine FB gestartet. Hierzu wird auf alle nun vorliegenden Informationen zugegriffen (Informationen der WSDL Datei und Eingabeinformationen). Als Ergebnis dieses Prozesses werden die Funktionsbausteine FB zusammen mit den Daten (Datenbaustein DB) erzeugt. Diese erzeugten Bausteine stehen somit zum Einbinden und Verwenden in Applikationsprogrammen APL bereit.

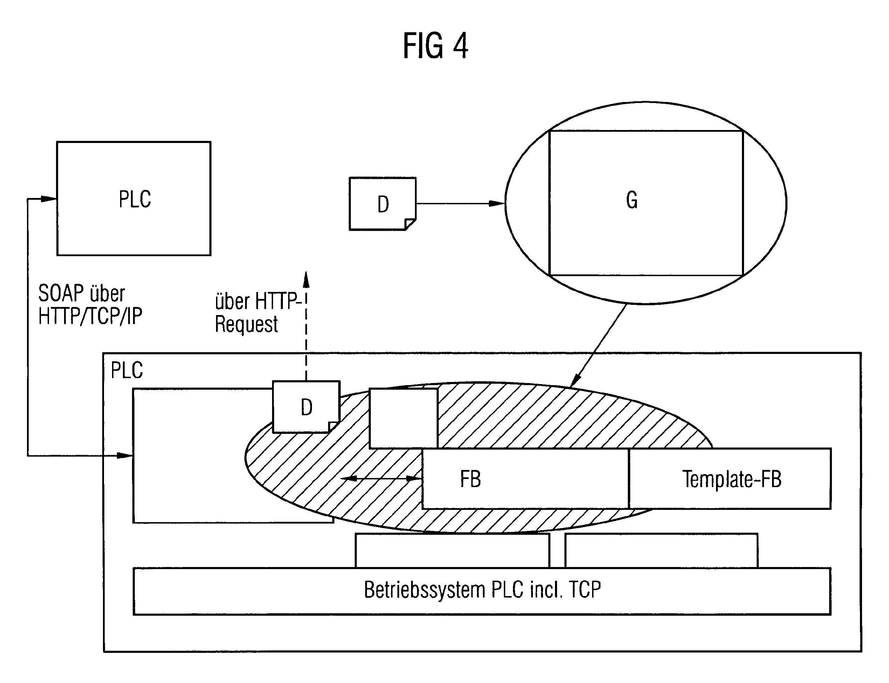

In Fig. 4 ist eine Konfiguration beschrieben, auf der das erfindungsgemäße Verfahren für einen Server zum Ablauf gelangt. Demgemäß ist eine Steuerungsvorrichtung PLC vorgesehen, die die Funktionalität eines Servers S aufweist und die während des laufenden Betriebes einen bestimmten Webdienst WS bereitstellen soll. Zu diesem Zweck wird vor Inbetriebnahme der Steuerungsvorrichtung PLC, also im Zuge der Erstellung eines Anwenderprogramms APL* das Generatorprogramm G* gestartet. Der Erstellungsprozess kann auch hier unabhängig von der Steuerungsvorrichtung PLC beispielsweise auf einem Personal Computer vorgenommen werden.

Zu Beginn des Erstellungsprozesses wird vom Generatorprogramm G* zunächst eine WSDL Datei D aufgerufen. Gemäß vorliegendem Ausführungsbeispiel wird davon ausgegangen, dass die WSDL Datei D die Definition mehrerer Webdienste WS beinhaltet. Somit erscheint als erstes ein Dropdown Menu, in dem der gewünschte Webdienst WS ausgewählt werden kann. Die Bereitstellung zusätzlicher Informationen im Sinne einer Konfiguration (Webservice-Verbindung, Input-Parameter, Output-Parameter) erfolgt analog dem PLC als Client.

Im Weiteren wird nun im Generatorprogramm G* die Generierung von Funktionsbausteinen FB gestartet. Als Ergebnis dieses Prozesses werden somit diese Funktionsbausteine FB zusammen mit einem Template Funktionsblock erzeugt und in das Applikationsprogramm APL* eingebunden. Letzterer ist dann noch speziell zu programmieren, da hier die Rückgabewerte beim Aufruf des Webdienstes dem aufrufenden Client übergeben werden. Schließlich ist das derart generierte Anwenderprogramm APL* zusammen mit den Funktionsbausteinen auf der Steuervorrichtung ablauffähig zu speichern und zu konfigurieren.

Schließlich ist im Generatorprogramm G, G* vorgesehen, die generierten Funktionsbausteine einem Test zu unterziehen, womit das gewünschte Ergebnis überprüft werden kann.

## Patentansprüche

1. Verfahren zur Unterstützung der Kommunikation zwischen einem Client (PLC) und einem Webdienst (WS),
**dadurch gekennzeichnet,**
**dass** im Zuge der Erstellung eines auf einem Client (PLC) ablauffähigen Anwenderprogramms (APL) eine WSDL Datei (D) aufgerufen wird,
**dass** nach Maßgabe der in dieser gespeicherten Informationen eine Auswahl des gewünschten Webdienstes (WS) getroffen wird, dass zusätzliche Informationen bereitgestellt werden,
**dass** aus diesen Informationen eine Generierung von Funktionsbausteinen (FB) und Daten (DB) vorgenommen wird, die in das Anwenderprogramm (APL) eingebunden werden.

2. Verfahren nach Anspruch 1,
**dadurch gekennzeichnet,**
**dass** die Erstellung des Anwenderprogramms (APL) sowie die Generierung der Funktionsbausteine (FB) und Daten (DB) von einem übergeordneten Generatorprogramm (G) gesteuert werden.

3. Verfahren nach Anspruch 1, 2,
**dadurch gekennzeichnet,**
**dass** die zusätzlichen Informationen Adressen, Art des Übertragungsprotokolls (SOAP) sowie Request-/ Response-Parameter umfassen.

4. Verfahren nach einem der vorstehenden Ansprüche,
**dadurch gekennzeichnet,**
**dass** die generierten Daten (DB) an die Speicherkapazität des Clients (PLC) angepasst werden.

5. Verfahren nach einem der vorstehenden Ansprüche,
**dadurch gekennzeichnet,**
**dass** nach Abschluss der Generierung der Funktionsbausteine (FB) vom übergeordneten Generatorprogramm (G) ein automatischer Test zur Verifizierung der Funktionsfähigkeit der Kommunikation durchgeführt wird.

6. Verfahren zur Bereitstellung eines Webdienstes (WS),
**dadurch gekennzeichnet,**
**dass** eine WSDL Datei (D) aufgerufen wird,
**dass** nach Maßgabe der in dieser gespeicherten Informationen eine Auswahl des gewünschten Webdienstes (WS) getroffen wird, dass zusätzliche Informationen bereitgestellt werden, und
**dass** aus diesen Informationen eine Generierung von Funktionsbausteinen (FB) und Template-Funktionsbausteinen vorgenommen wird.

7. Verfahren nach Anspruch 6,
**dadurch gekennzeichnet,**
**dass** die Erstellung des Anwenderprogramms (APL*) sowie die Generierung der Funktionsbausteinen (FB*) und Template-Funktionsbausteinen von einem übergeordneten Generatorprogramm (G*) gesteuert wird.

8. Verfahren nach Anspruch 6, 7,
**dadurch gekennzeichnet,**
**dass** die zusätzlichen Informationen Adressen, Art des Übertragungsprotokolls (SOAP) sowie Request-/ Response-Parameter umfassen.

9. Verfahren nach einem der vorstehenden Ansprüche,
**dadurch gekennzeichnet,**
**dass** die generierten Daten (DB) an die Speicherkapazität des Clients (PLC) angepasst werden.
